# EUROPÄISCHE PATENTSCHRIFT

(11) **EP 1 817 879 B1**
(45) Veröffentlichungstag und Bekanntmachung des Hinweises auf die Patenterteilung: **09.04.2008**
(21) Anmeldenummer: 05817415.2
(22) Anmeldetag: 11.11.2005
(51) Int. Cl.: H04L 12/56

(54) **ADAPTIVES BANDBREITENMANAGEMENTSYSTEM FÜR KAPAZITÄTS-TUNNEL ZEITLICH VARIABLER VERKEHRSMATRIZEN**
ADAPTIVE BANDWIDTH MANAGING SYSTEM FOR CAPACITOR TUNNELS OF A TIME-VARIABLE COMMUNICATION MATRIX
SYSTEME ADAPTATIF DE GESTION DE BANDE PASSANTE POUR TUNNELS DE CAPACITE DE MATRICES DE COMMUNICATION VARIABLES DANS LE TEMPS

(30) Priorität: 22.11.2004 DE 102004056306
(43) Veröffentlichungstag der Anmeldung: 15.08.2007
(73) Patentinhaber: Nokia Siemens Networks GmbH & Co. KG, 81541 München (DE)
(72) Erfinder: MENTH, Michael, 97255 Oellingen (DE); MILBRANDT, Jens, 71254 Ditzingen (DE)
(86) Internationale Anmeldenummer: PCT/EP2005/055915
(87) Internationale Veröffentlichungsnummer: WO 2006/056538

(56) Entgegenhaltungen:
- EP-A- 0 845 919
- US-A- 6 011 780
- US-A- 6 061 331
- MEDHI D: "Models for network design, servicing and monitoring of ATM networks based on the virtual path concept" COMPUTER NETWORKS AND ISDN SYSTEMS, NORTH HOLLAND PUBLISHING. AMSTERDAM, NL, Bd. 29, Nr. 3, Februar 1997 (1997-02), Seiten 373-386, XP004053984 ISSN: 0169-7552
- DINAN E ET AL: "ANALYTICAL FRAMEWORK FOR DYNAMIC TRAFFIC PARTITIONING IN MPLS NETWORKS" ICC 2000. 2000 IEEE INTERNATIONAL CONFERENCE ON COMMUNICATIONS. CONFERENCE RECORD. NEW ORLEANS, LA, JUNE 18-22, 2000, IEEE INTERNATIONAL CONFERENCE ON COMMUNICATIONS, NEW YORK, NY : IEEE, US, Bd. VOL 3 OF 3, 18. Juni 2000 (2000-06-18), Seiten 1604-1608, XP001208682 ISBN: 0-7803-6284-5

## Beschreibung

Der Anmeldungsgegenstand bezieht sich auf ein adaptives Bandbreitenmanagementsystem für Kapazitäts-Tunnels zur Vermeidung von Blockierung und Unterauslastung für zeitlich variable Verkehrsmatrizen.

Der Anmeldungsgegenstand betrifft ein Verfahren zur Nachführung von Kapazitäts-Tunneln in einem eine Vielzahl von Knoten aufweisenden Netzwerk.

In Kommunikationssystemen gibt es statische Kapazitätstunnels, die die Bandbreite eines Netzes virtuell aufteilen. Diese können z.B. Border-to-Border Budgets (BBBs) im Falle von BBB-basierter Network Admission Control (NAC) sein oder aber auch Tunnels fester Kapazität in einem (G)MPLS Umfeld. Die Dimensionierung der Kapazitätstunnels weist bislang folgende Merkmale auf:
- Die Kapazität wird statisch auf ein Verkehrsangebot bemessen
- Wenn sich das Verkehrsangebot für einen Tunnel zeitlich ändert, muss der Maximalwert für die Dimensionierung angenommen werden.

Entsprechend diesen Merkmalen mag das bisherige Verfahren zur Dimensionierung der Kapazitätstunnels auch als Static Bandwidth Allocation (SBA) bezeichnet werden.

Das Problem der variablen Verkehrsangebote wurde bisher mit SBA gelöst, was einem Overprovisioning (Kapazitätsüberversorung) entspricht, wenn die Busy-Hours für Verkehr in den unterschiedlichen Tunnels zeitlich versetzt auftreten. In der Literatur wird zur Lösung des SBA-Problems häufig das sogenannate Multi-Hour Design (MHD) genannt. Bei MHD von Netzen wird allerdings das Netz in festen Intervallen komplett neu designed, was unter anderem auch eine Änderung des Routings (Pfadschema) und des Load Balancings (Lastverteilung) bewirkt. Es wird also ein massiver Eingriff in das Netz vorgenommen.

Das Dokument "Models for network design, servicing and monitoring of ATM networks based on the virtual path concept" by Mehdi D.veröffentlicht ein Verfahren gemäß des Oberbegriffs des Anspruchs 1.

Dem Anmeldungsgegenstand liegt das Problem zugrunde, ein Verfahren zum Bandbreitenmanagement in einem Kommunikationsnetz anzugeben, bei dem weder das Routing noch das Load Balancing im Netz verändert werden muss.

Das Problem wird durch die Merkmale des Anspruchs 1 gelöst.

Bei dem Anmeldungsgegenstand werden - anders als bei dem generellen MHD - die erforderlichen Aktionen in vorteilhafter Weise auf die Veränderung der Tunnel-Kapazitäten eingeschränkt ohne dass Änderungen an der Konfiguration im Netz erforderlich wären.

Gegenüber dem MHD ändert sich nichts an der Konfiguration (Routing, Load Balancing) der Knoten innerhalb des Netzes. Vorteile ergeben sich aus der Reduktion der Anzahl der benötigten Rekonfigurationen, welche lediglich die die Tunnelkapazitäten verwaltenden Randknoten (in Fig alle Knoten außer 6) des Netzes betreffen. Dadurch lässt sich im Netz Signalisierung einsparen und der Zustand des Netzes wird stabilisiert.

Vorteilhafte Weiterbildungen des Anmeldungsgegenstandes sind in den Unteransprüchen angegeben.

Der Anmeldungsgegenstand wird im Folgenden als Ausführungsbeispiel in einem zum Verständnis erforderlichen Umfang anhand einer Figur näher erläutert. Dabei zeigt:
Fig eine prinzipielle Darstellung eines Telekommunikationsnetz.

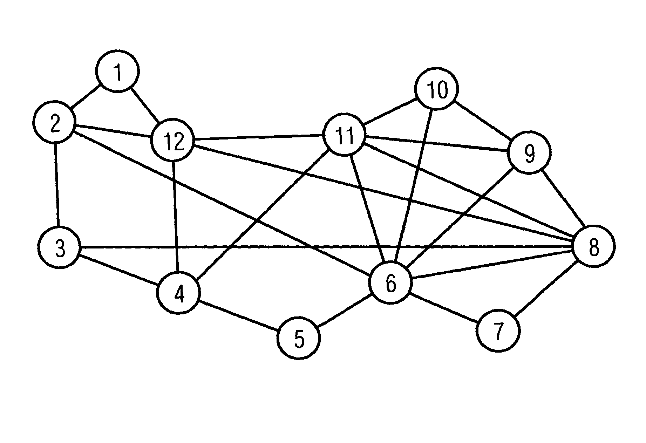

Das in der Figur dargestellte Telekommunikationsnetz ist mit einer Vielzahl von Netzknoten 1 bis 12 und diese verbindende Verbindungsstrecken (Links) gebildet. Im Zuge einer Kommunikationsverbindung mögen beispielsweise nach dem Internet Protocol übertragene Daten zwischen Netzknoten übertragen werden, wobei die Kommunikationsverbindung im Allgemeinen über eine Vielzahl von Knoten, beispielsweise 2, 12, 11, 6 und 7, verläuft. In dem Telekommunikationsnetz sind Kapazitäts-Tunnels einrichtbar, die über eine oder mehrere Verbindungsstrecken hinweg Übertragungsbandbreite reservieren. Die Reservierung von Übertragungsbandbreite mag für einen besonderen Dienst, beispielsweise für eine Datenübertragung mit Echtzeitanforderung, wie zum Beispiel Sprachübertragung mit Quality of Service (QoS)- Anforderung, erfolgen. Ein Kapazitäts-Tunnel nimmt einen einstellbaren Bruchteil bis zur ganzen Übertragungsbandbreite/-kapazität einer Verbindungsstrecke ein.

Gegeben ist das Telekommunikationsnetz durch seine Topologie und die entsprechenden Linkbandbreiten. Dazu ist eine Verkehrsmatrix gegeben. Es gibt Methoden, um die Netz-Kapazität auf virtuelle Tunnels so zu verteilen, dass die Flüsse aller Border-to-Border (b2b) Aggregate annähernd dieselbe Blockierwahrscheinlichkeit haben vgl.: Menth Michael, Gehrsitz Sebastian und Milbrandt Jens "Fair Assignment of Efficient Network Admission Control Budgets" Seiten 1121-1130, Sept 2003, Berlin, Germany. Dieses Verfahren mag "Budget Assignment" (BA) genannt werden. Ein solches Verfahren kann man auch auf Ausfallsicherheit erweitern vgl.: Michael Menth, Jens Milbrandt und Stefan Kopf "Capacity Assignment for NAC Budgets in Resilient Networks" Seiten 193 - 198, Juni 2004, Vienna, Austria. Diese Verfahren werden für statische Verkehrsmatrizen angewandt. Ändert sich der Verkehr aber über die Zeit, so muss für die Kapazitätszuteilung eine Verkehrsmatrix angenommen werden, die die zeitlichen Maxima der jeweiligen b2b Aggregate enthält. Besser ist es aber, die Kapazitätszuweisung auf die aktuelle Verkehrsmatrix zu adaptieren, was im Folgenden als "Adaptive Bandwidth Management" (ABM) bezeichnet wird.

Es wird ein Verfahren zum Messen bzw. zur Bestimmung der Verkehrsmatrix verwendet, was z.B. durch Protokollierung der Anfragen an den BBB NAC Entitäten erreicht werden kann. Dadurch kann die aktuelle Verkehrsmatrix als gegeben angenommen werden. Basierend auf der aktuellen Verkehrslast, die als Verkehrsmatrix für das Netz gegeben ist und in Erlang gemessen wird, der Verkehrszusammensetzung (Verteilung der Anfragegrö-βen) und der Tunnelgrößen können die jeweiligen Blockierwahrscheinlichkeiten berechnet und müssen nicht gemessen werden, was technisch auch problematisch wäre.

Es werden zwei Optionen für ABM (Adaptive Bandwidth Management) identifiziert:
1. Complete Capacity Reassignment (CCR)
   Der Bandwidth Allocation - Algorithmus wird angewandt um die Kapazitäten aller Tunnels neu zu berechnen und zu konfigurieren. Für das Triggern des CCR gibt es im Wesentlichen zwei Möglichkeiten:
   1.1 CCR wird in fest vorgegebenen periodischen Abständen, also unabhängig vom Netzzustand durchgeführt. Das ist die intuitive Vorgehensweise. Ein kleines Update-Intervall erfordert eine hohe Rechenleistung und bewirkt einen hohen Signalisierungs- und Konfigurationsaufwand. Ein grosses Update-Intervall bewirkt dagegen eine lange Reaktionszeit. Beide Extrema sind unerwünscht.
   1.2 CCR wird durch ein explizites Triggern ausgeführt. Hierfür werden zwei Mechanismen vorgeschlagen:
      Tolerance Intervals (TI)
   1.2.1. Wir definieren für jeden Tunnel eine untere und obere Grenze für die Blockierwahrscheinlichkeit. Ein Update wird nur dann durchgeführt, wenn sich die Blockierwahrscheinlichkeiten signifikant geändert haben, d.h. wenn die untere Tunnel-spezifische Grenze von der aktuellen Blockierwahrscheinlichkeit unterschritten bzw. die obere überschritten wurde. Die Reaktion auf das Unterschreiten der Untergrenze ist insoweit bedeutsam, weil dadurch die Blockierwahrscheinlichkeit für andere Tunnels durch eine Kapazitäts-Neuzuweisung gesenkt werden kann. Es gibt mehrere Möglichkeiten die obere und untere Schranke für die Blockierwahrscheinlichkeit, also ein Toleranzintervall, zu bestimmen. Der Parameter p ist dabei die geplante Blockierwahrscheinlichkeit des jeweiligen Tunnels und c ein frei wählbarer Parameter, mit dem die Update-Wahrscheinlichkeit reguliert werden kann:
   1.2.1.1. Lineare Bestimmung: [p(1-c), p(1+c)]
   1.2.1.2. Logarithmische Bestimmung: [p*exp(-c), p*exp(c)]
1.2.2. Reduction Threshold (RT)
   Der Trigger wird nur dann aktiviert, wenn die Anwendung des BA-Algorithmus zur deutlichen Reduktion der aktuellen Blockierwahrscheinlichkeit bei mindestens einem Tunnel führt. Zur Spezifikation der deutlichen Reduktion kann wieder eine lineare oder eine logarithmische untere Grenze (Reduction Threshold) herangezogen werden. Der Parameter p ist dabei die aktuelle Blockierwahrscheinlichkeit des jeweiligen Tunnels und c ein frei wählbarer Parameter, mit dem die Update-Wahrscheinlichkeit reguliert werden kann:
   1.2.2.1. Lineare Grenze: p(1-c)
   1.2.2.2. Logarithmische Grenze: p*exp(-c). Da es sich hier um eine einseitige Grenze handelt, gibt es zur linearen Grenze keinen echten Unterschied. Dieser soll nur die Größenordnung verdeutlichen, in der die Grenze liegen kann.
2. Selective Capacity Reassignment (SCR)
   Hier wird bei der Anwendung des BA-Agorithmus ein gewisser Anteil der Linkkapazitäten in einem Free Resource Pool (FRP) zurückgehalten und der Rest an die Tunnels vergeben. Die dadurch entstandenen Blockierwahrscheinlichkeiten werden als Planwerte benutzt. Die Änderung der Tunnelgrößen erfolgt nun selektiv, d.h. es werden nicht mehr die Kapazitäten aller Tunnels neu angepasst sondern nur von solchen, deren Blockierwahrscheinlichkeit sich signifikant geändert hat. Der BA-Algorithmus belässt die Kapazitäten aller anderen Tunnels gleich und senkt bzw. erhöht die Kapazitäten der kritischen Tunnels und damit der Blockierwahrscheinlichkeiten unter Zuhilfenahme der Kapazitäten im FRP derart, dass die Planwerte der Blockierwahrscheinlichkeiten wieder erreicht werden.
   2.1. SCR benötigt zum Triggern die TI-basierte Methode. Bei der RT-basierten Methode würde bei der ersten Kontrolle die Kapazität im FRP aufgebraucht werden um die aktuellen Blockierwahrscheinlichkeiten zu senken, auch wenn sie sich gegenüber den Planwerten noch nicht verändert haben. Die Folge wäre ein vorzeitiges Leerlaufen des FRP, wobei die Kapazität nicht unbedingt für Tunnels verwendet wird, die ihre Planwerte überschreiten.
   2.2. Falls Blockierwahrscheinlichkeiten außerhalb des TI liegen und durch den BA-Algorithmus nicht mehr reduziert werden können, weil im FRP nicht mehr genügend Kapazität vorhanden ist, wird CCR mit der Reservierung von Kapazitäten für den FRP wieder durchgeführt, was auch zu neuen Planwerten für die Blockierwahrscheinlichkeiten führt.

## Patentansprüche

1. Verfahren zur Nachführung von Kapazitäts-Tunneln in einem eine Vielzahl von Knoten (1..12) aufweisenden Netzwerk bei dem auf den Verbindungsstrecken zwischen den Knoten Tunnels für Datenübertragungs-Kapazität einrichtbar sind demzufolge
- die Verkehrsmatrix in dem Netzwerk bestimmt wird,
- nach Maßgabe der Verkehrsmatrix für eine Verbindungsstrecke ein jeweiliger Kapazitäts-Tunnel zugewiesen wird,
- nach Maßgabe eines Auslöseereignises eine aktualisierte Verkehrsmatrix in dem Netzwerk bestimmt wird,
**dadurch gekennzeichnet, daß**
- die Größe des Kapazitäts-Tunnels an die aktualisierte Verkehrsmatrix angepasst wird.

2. Verfahren nach Anspruch 1
**dadurch gekennzeichnet, dass**
das Auslöseereignis durch Ablauf eines vorgegebenen Zeitintervalls gegeben ist.

3. Verfahren nach Anspruch 1
**dadurch gekennzeichnet, dass**
das Auslöseereignis durch Überschreiten einer oberen Verkehrsschwelle der Verbindungsstrecke, wie sie durch die aktualisierte Verkehrsmatrix bestimmt ist, gegeben ist.

4. Verfahren nach Anspruch 3
**dadurch gekennzeichnet, dass**
das Auslöseereignis durch Unterschreiten einer unteren Verkehrsschwelle, wie sie durch die aktualisierte Verkehrsmatrix bestimmt ist, der Verbindungsstrecke gegeben ist.

5. Verfahren nach einem der vorstehenden Ansprüche
**dadurch gekennzeichnet, dass**
alle Kapazitäts-Tunnels aller Verbindungsstrecken an die aktualisierte Verkehrsmatrix angepasst werden.

6. Verfahren nach einem der Ansprüche 1 bis 4
**dadurch gekennzeichnet, dass**
ein für eine Mehrzahl von -Tunneln gemeinsamer Vorrat an Datenübertragungs-Kapazität bereitgehalten wird, wobei bei Überschreiten einer oberen Verkehrsschwelle oder Unterschreiten einer unteren Verkehrsschwelle ein Kapazitäts-Tunnel Datenübertragungs-Kapazität dem Vorrat entnimmt bzw. an den Vorrat zurückgibt.

7. Verfahren nach einem der vorstehenden Ansprüche
**dadurch gekennzeichnet, dass**
es nur durchgeführt wird, wenn es zu einer deutlichen Reduktion der aktuellen Blockierwahrscheinlichkeit bei mindestens einem Kapazitäts-Tunnel führt.

## Claims

1. Method for readjustment of capacity tunnels in a network which has a multiplicity of nodes (1..12), in which tunnels for data transmission capacity can be set up on the connecting paths between the nodes, as a consequence of which
- the traffic matrix is defined in the network,
- a respective capacity tunnel is assigned on the basis of the traffic matrix for a connecting path,
- an updated traffic matrix is defined in the network on the basis of an initiation event,
**characterized in that**
- the size of the capacity tunnel is matched to the updated traffic matrix.

2. Method according to Claim 1, **characterized in that** the initiation event occurs when a predetermined time interval elapses.

3. Method according to Claim 1, **characterized in that** the initiation event occurs by exceeding an upper traffic threshold on the connecting path as is defined by the updated traffic matrix.

4. Method according to Claim 3, **characterized in that** the initiation event occurs by undershooting a lower traffic threshold, as is defined by the updated traffic matrix, on the connecting path.

5. Method according to one of the preceding claims, **characterized in that** all the capacity tunnels of all the connecting paths are matched to the updated traffic matrix.

6. Method according to one of Claims 1 to 4, **characterized in that** a supply of data transmission capacity which is shared by a plurality of tunnels is provided, with a capacity tunnel data transmission capacity being taken from the supply or being fed back to the supply when an upper traffic threshold is exceeded or a lower traffic threshold is undershot.

7. Method according to one of the preceding claims, **characterized in that** the method is carried out only when it leads to a considerable reduction in the current blocking probability of at least one capacity tunnel.

## Revendications

1. Procédé de mise à jour de tunnels de capacité dans un réseau comprenant une pluralité de noeuds (1 ... 12), dans lequel des tunnels pour une capacité de transmission de données peuvent être établis sur les liaisons de connexion entre les noeuds, en conséquence de quoi
- la matrice de trafic est déterminée dans le réseau,
- un tunnel de capacité respectif est attribué pour une liaison de connexion conformément à la matrice de trafic,
- une matrice de trafic actualisée est déterminée dans le réseau en raison d'un événement déclencheur,
**caractérisé en ce que**
- la taille du tunnel de capacité est adaptée à la matrice de trafic actualisée.

2. Procédé selon la revendication 1, **caractérisé en ce que** l'événement déclencheur est fourni par l'écoulement d'un intervalle de temps prédéfini.

3. Procédé selon la revendication 1, **caractérisé en ce que** l'événement déclencheur est fourni par le dépassement d'un seuil de trafic supérieur de la liaison de connexion tel que déterminé par la matrice de trafic actualisée.

4. Procédé selon la revendication 3, **caractérisé en ce que** l'événement déclencheur est fourni par le sous-passement d'un seuil de trafic inférieur tel que déterminé par la matrice de trafic actualisée.

5. Procédé selon l'une des revendications précédentes, **caractérisé en ce que** tous les tunnels de capacité de toutes les liaisons de connexion sont adaptés à la matrice de trafic actualisée.

6. Procédé selon l'une des revendications 1 à 4,
**caractérisé en ce qu'**une réserve de capacité de transmission de données commune à une pluralité de tunnels est tenue à disposition, un tunnel de capacité prélevant de la capacité de transmission de données dans la réserve resp. restituant de la capacité de transmission de données à la réserve en cas de dépassement d'un seuil de trafic supérieur ou de sous-passement d'un seuil de trafic inférieur.

7. Procédé selon l'une des revendications précédentes, **caractérisé en ce qu'**il n'est exécuté que lorsqu'il entraîne une réduction notable de la probabilité de blocage actuelle pour au moins un tunnel de capacité.
